# EUROPEAN PATENT SPECIFICATION

(11) **EP 2 268 473 B1**
(45) Date of publication and mention of the grant of the patent: **24.07.2019**
(21) Application number: 09725688.7
(22) Date of filing: 23.03.2009
(51) Int. Cl.: B29C 48/00, F25D 23/06, B32B 25/20, B32B 5/20, B32B 5/32, B32B 25/04, B32B 25/06, B32B 27/18, B32B 27/22, B32B 27/28, B32B 27/30, B32B 27/32, B32B 27/34, B32B 27/36, B32B 27/40, B29C 44/24, B29C 44/56, B29L 31/00, B32B 27/06, B32B 27/20

(54) **METHODS OF MAKING REDUCED WEIGHT MULTILAYER POLYMERIC ARTICLES**
VERFAHREN ZUR HERSTELLUNG VON MEHRSCHICHTIGEN POLYMERARTIKELN VON GERINGEM GEWICHT
Procédés de fabrication des articles polymères multicouches allégés

(30) Priority: 26.03.2008 US 56103
(43) Date of publication of application: 05.01.2011
(73) Proprietor: Fina Technology, Inc., Houston, TX 77267-4412 (US)
(72) Inventor: SHULER, Joe, League City TX 77573 (US); TIPPET, Jon, League City TX 77573 (US); AGUIRRE, Juan, League City TX 77573 (US)
(74) Representative: Raboin, Jean-Christophe
(86) International application number: PCT/US2009/037943
(87) International publication number: WO 2009/120624

(56) References cited:
- EP-A1- 0 629 498
- EP-A1- 0 629 498
- WO-A1-96/21564
- WO-A1-96/21564
- DE-A1- 19 528 648
- US-A- 3 960 631
- US-A- 4 005 919
- US-A- 5 340 208
- US-A- 5 653 867
- US-A- 5 716 581
- US-A1- 2002 074 916
- US-B1- 6 589 646

## Description

### BACKGROUND

### Technical Field

This disclosure relates to methods of preparing multilayer polymeric articles. More specifically, this disclosure relates to methods of reducing the weight of a multilayer polymeric article and methods of using same.

### Background

Synthetic polymeric materials are widely used in the manufacturing of a variety of end-use articles ranging from medical devices to food containers. Copolymers of monovinylidene aromatic compounds such as styrene, alpha-methylstyrene and ring-substituted styrene comprise some of the most widely used thermoplastic elastomers. For example, styrenic copolymers can be useful for a range of end-use applications including disposable medical products, food packaging, tubing, and point-of-purchase displays.

One of the ways for the manufacturers of polymer products to remain competitive is to lower production costs. For example, reducing the weight of a product may lead to savings in energy cost thus leading to lower production cost. However, the reduced weight product has to maintain certain properties that render such products suitable for a particular application. Thus, an ongoing need exists for compositions and methodologies for the production of polymeric compositions having a reduced weight while maintaining desired properties.

EP 0 629 498 A1 relates to multi-layered product comprising an acrylonitrile-butadiene-styrene (ABS) with a low rubber content and an ABS layer with a high rubber content. Thermoformable multilayer sheets of an ABS resin layer and a relatively high rubber ABS layer can be thermoformed to provide equipment liners. Such liners are used together with an insulative foam material to obtain a product such as an insulative refrigerator equipment system.

US 6 589 646 B1 relates to a composite layered sheet comprising at least one substrate layer and at least one functional layer. This composite layered sheet is suitable for producing refrigerator housings with polyurethane foam cores.

WO 96/21564 A1 relates to an insulation panel which comprises a first wall, a second wall being a synthetic resin and a foamed-in-situ polyurethane foam.

US 2002/0074916 A1 relates to claddings for a refrigeration appliance. Inner and outer claddings of the refrigeration appliance form an interspace which can be filled with a thermal insulation material.

### SUMMARY

Disclosed herein is a method of preparing a refrigeration insulation liner in accordance with claim 1.

### BRIEF DESCRIPTION OF THE DRAWINGS

For a more complete understanding of the present disclosure and the advantages thereof, reference is now made to the following brief description, taken in connection with the accompanying drawings and detailed description, wherein like reference numerals represent like parts.
Figure 1 is an illustration of a weight reduced multilayer polymeric sheet.
Figure 2 is a plot of Gardner impact as a function of density for the samples from Example 1.
Figure 3 is a plot of tensile strength properties for the samples from Example 1.
Figure 4 is a photomicrograph of a foamed inner core layer for Sample 4 from Example 1.

### DETAILED DESCRIPTION

Multilayer polymeric articles having reduced weight, herein termed reduced weight multilayer polymeric articles (RWMAs), and methods of making and using same are disclosed herein. In an embodiment, the multilayer polymeric article comprises polymeric sheets wherein at least one sheet/layer comprises a foamed polymeric composition. Such multilayer polymeric articles may have a reduced overall weight when compared to an otherwise similar multilayer polymeric article lacking at least one foamed layer. RWMAs of the type described herein may display desirable impact and tensile properties when compared to otherwise similar multilayer polymeric articles lacking a foamed layer.

In an embodiment, the RWMA comprises one or more non-foamed polymer layers and at least one foamed polymer layer. The non-foamed polymer layer is also referred to herein as the "solid" polymer layer. In an embodiment, the solid polymer layers and foamed polymer layers comprise the same polymeric materials. Alternatively, the solid polymer layers and foamed polymer layers comprise different polymeric materials. Examples of suitable polymeric materials include without limitation homopolymers and copolymers of polyolefins (e.g., polypropylene, polyethylene), polyethylene terephthalate, polyvinyl chloride, polyvinylidine chloride, polylactic acid, polyamide, polycarbonate, polytetrafluoroethylene, polyurethane, polyester, polymethyl methacrylate, polyoxymethylene, styrenic polymers, or combinations thereof.

In an embodiment, the polymeric material comprises a styrenic polymer (e.g., polystyrene), wherein the styrenic polymer may be a styrenic homopolymer or a styrenic copolymer. In an embodiment, one or more styrene compounds are used as monomers for the formation of the styrenic polymer and are included in same as repeating units. Styrene, also known as vinyl benzene, ethyenylbenzene, and phenylethene is an organic compound represented by the chemical formula C₈H₈. Styrene is widely commercially available and as used herein the term styrene includes a variety of substituted styrenes (e.g., alpha-methyl styrene), ring-substituted styrenes such as p-methylstyrene, disubstituted styrenes such as p-t-butyl styrene as well as unsubstituted styrenes. Accordingly, in various embodiments, one or more solid layers and/or one or more foamed layers of the RWMA may comprise a styrenic polymer.

In an embodiment, the styrenic polymer is present in a reaction mixture used to prepare one or more layers of an RWMA in an amount of from 1.0 to 99.9 weight percent (wt.%) by total weight of the total mixture, alternatively from 50 wt.% to 99 wt.%, alternatively from 90 wt.% to 99 wt.%. In an embodiment, the styrenic polymer comprises the balance of the reaction mixture when other ingredients are accounted for.

In some embodiments, the styrenic polymer is a styrenic copolymer comprising styrene and one or more comonomers. Examples of comonomers may include without limitation α-methylstyrene; halogenated styrenes; alkylated styrenes; acrylonitrile; esters of (meth)acrylic acid with alcohols having from 1 to 8 carbons; N-vinyl compounds such as vinylcarbazole, maleic anhydride; compounds which contain two polymerizable double bonds such as divinylbenzene or butanediol diacrylate; or combinations thereof. The comonomer may be present in an amount effective to impart one or more user-desired properties to the composition. Such effective amounts may be determined by one of ordinary skill in the art with the aid of this disclosure. For example, the comonomer may be in a reaction mixture used to prepare one or more layers of an RWMA in an amount ranging from 1 wt.% to 99.9 wt.% by total weight of the reaction mixture, alternatively from 1 wt.% to 90 wt.%, alternatively from 1 wt.% to 50 wt.%.

In an embodiment, one or more solid layers and/or one or more foamed layers of the RWMA may comprise a high impact polystyrene (HIPS). Such HIPS contains an elastomeric phase that is embedded in the styrenic polymer resulting in the composition having an increased impact resistance. In an embodiment, one or more solid layers and/or one or more foamed layers of the RWMA may comprise a HIPS having a conjugated diene monomer as the elastomer. Examples of suitable conjugated diene monomers include without limitation 1,3-butadiene, 2-methyl-1,3-butadiene, 2 chloro-1,3 butadiene, 2-methyl-1,3-butadiene, and 2 chloro-1,3-butadiene. Alternatively, the RWMA comprises a HIPS having an aliphatic conjugated diene monomer as the elastomer. Without limitation, examples of suitable aliphatic conjugated diene monomers include C₄ to C9 dienes such as butadiene monomers. Blends or copolymers of the diene monomers may also be used.

The elastomer may be present in amounts effective to produce one or more user-desired properties. Such effective amounts may be determined by one of ordinary skill in the art with the aid of this disclosure. For example, the elastomer may be present in a reaction mixture used to prepare one or more layers of an RWMA in an amount ranging from 0.1 wt.% to 50 wt.% by total weight of the reaction mixture, alternatively from 0.5 wt.% to 40 wt.%, alternatively from 1 wt.% to 30 wt.%.

In an embodiment, one or more solid layers and/or one or more foamed layers of the RWMA may comprise a styrenic polymer generally having the properties set forth in Table 1A.

**Table 1A**

| **Properties** | **Test method** | **Range 1** | **Range 2** | **Range 3** |
|---|---|---|---|---|
| Melt-mass flow rate (g/10min.) | ASTM D1238 | 1-14 | 1.5-6 | 2-4 |
| Gardner impact (kg-cm) | ASTM D 3029 | 0-207.4 (0-180 in-lb) | 92.2-161.3 (80-140 in-lb) | 115.2-138.3 (100-120 in-lb) |
| Notched Izod impact strength (J/m) | ASTM D-256 | 26.7-213.4 (0.5-4.0 ft.lb/in) | 80-186.7 (1.5-3.5 ft.lb/in) | 106.7-160.1 (2.0-3.0 ft.lb/in) |
| Tensile strength (MPa) | ASTM D-638 | 10.3-55.2 (1500-8000 psi) | 12.4-27.6 (1800-4000 psi) | 13.8-20.7 (2000-3000) |
| Tensile modulus, MPa | ASTM D-638 | 689.5-3447.4 (1.0-5.0 10⁵ psi) | 1034.2-2068.4 (1.5-3.0 10⁵ psi) | 1379-1723.7 (2.0-2.5 10⁵ psi) |
| Elongation (%) | ASTM D-638 | 5-90 | 50-95 | 60-80 |
| Flexural strength (MPa) | ASTM D-790 | 20.7-100 (3000-14500 psi) | 27.6-48.3 (4000-7000) | 31-37.9 (4500-5500 psi) |
| Flexural modulus, MPa | ASTM D-790 | 689.5-3447.4 (1.0-5.0 10⁵ psi) | 1034.2-2413.2 (1.5-3.5 10⁵ psi) | 1379-2068.4 (2.0-3.0 10⁵ psi) |
| Heat distortion temperature (°C) | ASTM D-648 | 85-98.9 (185-210°F) | 87.7-96.1 (190-205°F) | 90.6-93.3 (195-200°F) |
| Vicat temperature | ASTM D-1525 | 195-225 | 200-220 | 205-215 |
| Gloss 60° | ASTM D-523 | 40-100 | 45-85 | 50-65 |

Examples of styrenic copolymers suitable for use in forming one or more layers of the RWMA include without limitation styrene butadiene rubber (SBR), acrylonitrile butadiene styrene (ABS), styrene acrylonitrile (SAN), and the like. A styrenic polymer suitable for use in forming one or more layers of the RWMA includes without limitation 960E, which is a commercially available HIPS from Total Petrochemicals USA, Inc. In an embodiment, the styrenic polymer (e.g., 960E) has generally the physical properties set forth in Table IB.

**Table 1B**

| **Properties** | **960E Typical Value** | **Test Method** |
|---|---|---|
| Melt flow rate (MFR), g/10 min. | 3.8 | ASTM D-1238 |

| **Impact properties** | | |
|---|---|---|
| Gardner impact, kg-cm | 126.7 (110 in-lb) | ASTM D-3029 |
| Notched Izod impact strength, J/m | 160.1 (3.0 ft-lb/in) | ASTM D-256 |

| **Tensile properties** | | |
|---|---|---|
| Tensile strength, MPa | 17.2 (2,500 psi) | ASTM D-638 |
| Tensile modulus, MPa | 1585.8 (2.3.10⁵ psi) | ASTM D-638 |
| Elongation, % | 70 | ASTM D-638 |

| **Flexural properties** | | |
|---|---|---|
| Flexural strength, MPa | 33.1 (4,800 psi) | ASTM D-790 |
| Flexural modulus, MPa | 1654.7 (2.4.10⁵ psi) | ASTM D-790 |

| **Thermal properties** | | |
|---|---|---|
| Heat distortion temperature, °C | 91.7 (197°F) | ASTM D-648 |
| Vicat temperature, °C | 98.9 (210°F) | ASTM D-1525 |

| **Physical properties** | | |
|---|---|---|
| Gloss, 60° | 57 | ASTM D-523 |

In an embodiment, a process for the production of the styrenic polymer comprises contacting the styrenic monomer, and optionally one or more comonomers, with at least one initiator. Any initiator capable of free radical formation that facilitates the polymerization of styrene may be employed. Such initiators include by way of example and without limitation organic peroxides. Examples of organic peroxides useful for polymerization initiation include without limitation diacyl peroxides, peroxydicarbonates, monoperoxycarbonates, peroxyketals, peroxyesters, dialkyl peroxides, hydroperoxides or combinations thereof. In an embodiment, the initiator level in the reaction mixture is given in terms of the active oxygen in parts per million (ppm). For example, the level of active oxygen level in the disclosed reactions for the production of the styrenic polymer is from 20 ppm to 80 ppm, alternatively from 20 ppm to 60 ppm, alternatively from 30 ppm to 60 ppm. As will be understood by one of ordinary skill in the art, the selection of initiator and effective amount will depend on numerous factors (e.g., temperature, reaction time) and can be chosen by one of ordinary skill in the art with the benefits of this disclosure to meet the desired needs of the process. Polymerization initiators and their effective amounts have been described in U.S. Patent Nos. 6,822,046; 4,861,127; 5,559,162; 4,433,099 and 7,179,873.

In an embodiment, one or more layers of the RWMA comprise a HIPS, wherein the elastomer comprises polybutadiene. In an embodiment, a method for the production of the HIPS comprises the dissolution of polybutadiene elastomer (PB) in styrene that is subsequently polymerized. During polymerization, a phase separation based on the immiscibility of polystyrene (PS) and polybutadiene (PB) occurs in two stages. Initially, the PB forms the major or continuous phase with styrene dispersed therein. As the reaction begins, PS droplets form and are dispersed in an elastomer solution of PB and styrene monomer. As the reaction progresses and the amount of polystyrene continues to increase, a morphological transformation or phase inversion occurs such that the PS now forms the continuous phase and the PB and styrene monomer forms the discontinuous phase. This phase inversion leads to formation of the discontinuous phase comprising complex elastomeric particles in which the elastomer exists in the form of PB membranes surrounding occluded domains of PS. The polymerization reaction for formation of the polymeric material (i.e. HIPS) used to prepare the one or more layers of the RWMA may be represented by the chemical equations given below:

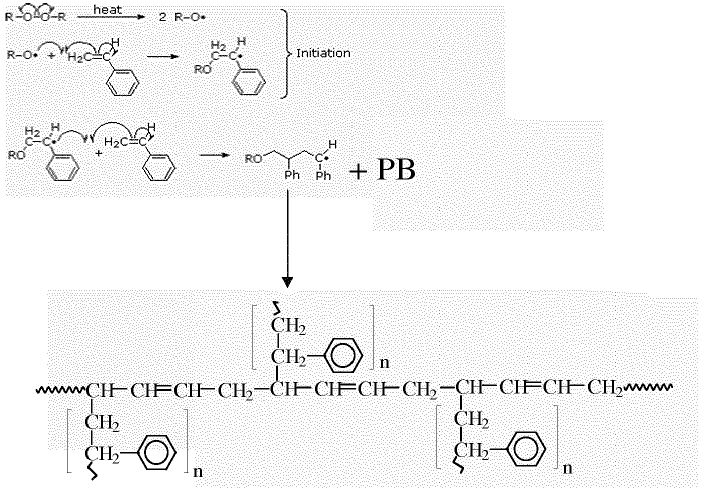

In an embodiment, the polymerization reaction to form the polymeric material (i.e., HIPS) may be carried out in a solution or mass polymerization process. Mass polymerization, also known as bulk polymerization refers to the polymerization of a monomer in the absence of any medium other than the monomer and a catalyst or polymerization initiator. Solution polymerization refers to a polymerization process in which the monomers and polymerization initiators are dissolved in a non-monomeric liquid solvent at the beginning of the polymerization reaction. The liquid is usually also a solvent for the resulting polymer or copolymer.

The polymerization process can be either batch or continuous. In an embodiment, the polymerization reaction may be carried out using a continuous production process in a polymerization apparatus comprising a single reactor or a plurality of reactors. For example, the polymeric composition can be prepared using an upflow reactor. Reactors and conditions for the production of a polymeric composition are disclosed in U.S. Pat. No. 4,777,210.

The temperature ranges useful with the process of the present disclosure can be selected to be consistent with the operational characteristics of the equipment used to perform the polymerization. In one embodiment, the temperature range for the polymerization can be from 90 °C to 240 °C. In another embodiment, the temperature range for the polymerization can be from 100 °C to 180 °C. In yet another embodiment, the polymerization reaction may be carried out in a plurality of reactors with each reactor having an optimum temperature range. For example, the polymerization reaction may be carried out in a reactor system employing a first and second polymerization reactors that are either continuously stirred tank reactors (CSTR) or plug-flow reactors. In an embodiment, a polymerization reactor for the production of a styrenic copolymer of the type disclosed herein comprising a plurality of reactors may have the first reactor (e.g. a CSTR), also known as the prepolymerization reactor, operated in the temperature range of from 90 °C to 135 °C while the second reactor (e.g. CSTR or plug flow) may be operated in the range of from 100 °C to 165 °C.

The polymerized product effluent from the first reactor may be referred to herein as the prepolymer. When the prepolymer reaches the desired conversion, it may be passed through a heating device into a second reactor for further polymerization. The polymerized product effluent from the second reactor may be further processed and described in detail in the literature. Upon completion of the polymerization reaction, a styrenic polymer is recovered and subsequently processed, for example devolatized, pelletized, etc.

In an embodiment, the polymeric material (i.e., HIPS) used to form one or more layers of the RWMA may also comprise additives as deemed necessary to impart desired physical properties, such as, increased gloss or color. Examples of additives include without limitation stabilizers, chain transfer agents, talc, antioxidants, UV stabilizers, lubricants, plasticizers, ultra-violet screening agents, oxidants, anti-oxidants, anti-static agents, ultraviolet light absorbents, fire retardants, processing oils, mold release agents, coloring agents, pigments/dyes, fillers, and the like. The aforementioned additives may be used either singularly or in combination to form various formulations of the composition. For example, stabilizers or stabilization agents may be employed to help protect the polymeric composition from degradation due to exposure to excessive temperatures and/or ultraviolet light. These additives may be included in amounts effective to impart the desired properties. Effective additive amounts and processes for inclusion of these additives to polymeric compositions may be determined by one skilled in the art with the aid of this disclosure. For example, one or more additives may be added after recovery of the styrenic polymer, for example during compounding such as pelletization. Alternatively or additionally to the inclusion of such additives in the styrenic polymer component of the RWMAs, such additives may be added during formation of the one or more layers of the RWMAs or to one or more other components and/or layers of the RWMAs. In an embodiment, additives may be present in the RWMA in an amount of from 0.1 wt.% to 50 wt.%, alternatively from 0.2 wt.% to 30 wt.%, alternatively from 0.5 wt.% to 20 wt.% based on the total weight of the RWMA.

In an embodiment, the RWMA comprises at least one foamed polymeric layer. The foamed polymeric layer may be prepared from a composition comprising a styrenic polymer and a foaming agent. The styrenic polymer may be of the type described previously herein. The foaming agent may be any foaming agent compatible with the other components of the RWMA such as for example physical blowing agents, chemical blowing agents, and the like.

In an embodiment, the foaming agent is a physical blowing agent. Physical blowing agents are typically nonflammable gases that are able to evacuate the composition quickly after the foamed is formed. Examples of physical blowing agents include without limitation pentane, carbon dioxide, nitrogen, water vapor, propane, n-butane, isobutane, n-pentane, 2,3-dimethylpropane, 1-pentene, cyclopentene, n-hexane, 2-methylpentane, 3-methylpentane, 2,3-dimethylbutane, 1-hexene, cyclohexane, n-heptane, 2-methylhexane, 2,2-dimethylpentane, 2,3-dimethylpentane, and the like. In an embodiment, the physical blowing agent is incorporated into the polymeric composition (e.g., a molten composition) in an amount of from 0.1 wt.% to 10 wt.%, alternatively from 0.1 wt.% to 5.0 wt.% , alternatively from 0.5 wt.% to 2.5 wt.% wherein the weight percent is based on the total weight of the polymeric composition used to produce a foamed composition. The foamed composition may be formed into one or more foamed layers of the RWMA. In an embodiment, the foaming agent is a chemical foaming agent, which may also be referred to as a chemical blowing agent. A chemical foaming agent is a chemical compound that decomposes endothermically at elevated temperatures. A chemical foaming agent suitable for use in this disclosure may decompose at temperatures of from 121.1°C to 298.9°C (250 °F to 570 °F), alternatively from 165.6°C to 204.4°C (330 °F to 400 °F). Decomposition of the chemical foaming agent generates gases that become entrained in the polymer, thus leading to the formation of voids within the polymer. In an embodiment, a chemical foaming agent suitable for use in this disclosure may have a total gas evolution of from 20 ml/g to 200 ml/g, alternatively from 75 ml/g to 150 ml/g, alternatively from 110 ml/g to 130 ml/g; resulting in the foamed composition having a bulk density of from 0.25 g/cc to 1.0 g/cc, alternatively from 0.50 g/cc to 0.99 g/cc, alternatively from 0.70 g/cc to 0.99 g/cc. Examples of chemical foaming agents suitable for use in this disclosure include without limitation SAFOAM FP-20, SAFOAM FP-40, SAFOAM FPN3-40, all of which are commercially available from Reedy International Corporation. In an embodiment, the chemical foaming agent (e.g., SAFOAM FP-40) has generally the physical properties set forth in Table 2.

**Table 2**

| **Properties** | SAFOAM FP-40 Typical Values |
|---|---|
| Total Gas Evolution | 120 ± 20 ml/g |
| Bulk Density | 0.70 ± 0.10 g/cc |
| Decomposition Temperature | 165.6°C to 204.4°C (330 °F to 400 °F) |

In an embodiment, the chemical foaming agent may be incorporated in the polymeric composition (e.g., HIPS) in an amount of from 0.10 wt.% to 5 wt.% by total weight of the polymeric composition, alternatively from 0.25 wt.% to 2.5 wt.%, alternatively from 0.5 w.% to 2 wt.%. Upon heating (e.g., extrusion), the chemical foaming agent functions to yield a foamed polymer composition, which may be formed into one or more layers of the RWMA as described in detail herein

In an embodiment, the foamed polymeric composition is prepared by contacting the polymer (e.g., HIPS) with the foaming agent, and thoroughly mixing the components for example by compounding or extrusion. In an embodiment, the HIPS is plasticized or melted by heating in an extruder and is contacted and mixed thoroughly with foaming agent at a temperature of less than 176.7°C (350°F). Alternatively, the HIPS may be contacted with the foaming agent prior to introduction of the mixture to the extruder (e.g., via bulk mixing), during the introduction of the styrenic polymer to an extruder, or combinations thereof. Methods for preparing a foamed polymer composition are described in U.S. Patents Nos. 5,006,566 and 6,387,968.

In an embodiment, the RWMA is a multilayer structure comprising one or more solid layers and one or more foamed layers which may be produced using any method suitable for the production of such materials. Any order of foamed and/or solid layers may be employed, for example one or more foamed layers sandwiched between one or more solid layers. For example, the RWMA may be produced by a coextrusion cast process wherein one or more polymers are melted and at least one polymer is melted and foamed. Processes for melting and foaming the polymeric compositions have been described previously herein.

In an embodiment, molten polymer and foamed molten polymer are coextruded through a slot or die with two or more orifices arranged such that the extruded sheets merge and form a composite extruded sheet comprising one or more foamed layers and one or more solid layers. Accordingly, the composite extruded sheet may have one or more solid sheets, which become solid layers in the RWMA, and at least one foamed sheet, which becomes a foamed layer in the RWMA. In an embodiment, the RWMA comprises a composite extruded sheeting having a foamed inner layer surrounded or sandwiched between two solid layers. In an alternative embodiment, the molten polymer may then exit through a die and the molten plaque may be used to form a cast sheet, an oriented sheet, or the like. For example, the molten plaque may exit through the die and be uniaxially stretched while being taken up onto a chill roller where it is cooled to produce a cast film. The RWMA may have a thickness of greater than 0.25 mm (10 mils), alternatively greater than 1.27 mm (50 mils), alternatively greater than 1.78 mm (70 mils).

Such sheets may be further shaped and/or formed into end use articles or components by methods such as thermoforming. In an embodiment, the thermoforming is carried out at a temperature of from 120 °C to 165 °C, alternatively from 125 °C to 160 °C, alternatively from 130 °C to 155 °C. In an embodiment, the RWMA sheeting may be thermoformed into an article wherein the energy consumption required for thermoforming the RWMA is reduced, for example from 5% to 75%, alternatively 5% to 50%, alternatively 5% to 25%, when compared to the energy required to thermoform a solid structure (i.e., lacking a foamed layer) of similar materials for similar uses. Likewise, thermoformer operating temperatures can be reduced, for example from 1% to 7%, alternatively 2% to 6% percent, alternatively 3% to 5% percent, when compared to the energy required to thermoform a solid structure (i.e., lacking a foamed layer) of similar materials for similar uses.

In an embodiment, the RWMA is oriented. Generally, orientation of a polymer composition refers to the process whereby directionality (the orientation of molecules relative to each other) is imposed upon the polymeric arrangements in the film. Such orientation is employed to impart desirable properties to films, such as toughness and opaqueness, for example.

In an embodiment, the RWMA comprises one or more solid layers and at least one foamed layer. Consequently, the RWMA may have two or more total layers, such as for example 2, 3, 4, or 5 layers.

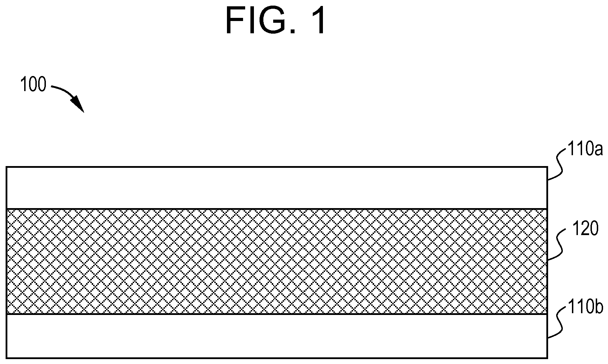

In an embodiment, the RWMA is a multilayer polymeric sheet comprising three layers as illustrated in Figure 1. Referring to Figure 1, an RWMA 100 comprises a foamed inner core layer 120 disposed between two solid outer layers 110 (a and b). The solid outer layers 110a and 110b may comprise the same polymeric material as the core layer with the distinction that the core layer is prepared from a foamed polymeric composition. In such embodiments, the resultant article is said to have an "A-B-A" structure.

In alternative embodiments, the solid outer layers and inner core layer may each be comprised of different polymeric compositions wherein the core layer comprises a foamed polymeric composition and the resultant article is said to have an "A-B-C" structure. For example, layers A, B, and C may be prepared from polymeric compositions X, Y, and Z respectively wherein Y is a foamed polymeric composition used to prepared the inner core layer B.

The thickness of the individual layers (e.g. Outer layers A and/or C and core layer B) may be selected by one of ordinary skill in the art with the aid of this disclosure to achieve user desired properties (i.e., weight reduction, tensile properties, impact properties, etc.). In an embodiment, the thickness of the outer layers, e.g., A and/or C layers, may constitute from 5% to 50% of the total thickness of the RWMA, alternatively from 10% to 40%, alternatively from 20% to 40%. In an embodiment, the thickness of the B layer may constitute from 50% to 95% of the total thickness of the RWMA, alternatively from 60% to 90%, alternatively from 60% to 80%.

In an embodiment, the RWMA may have a reduced weight when compared to an otherwise similar article lacking a foamed layer. This may be reflected by the reduced density of an RWMA when compared to an otherwise similar article lacking a foamed polymeric layer. Density is the ratio of mass per unit volume. In an embodiment, the RWMA may exhibit a density of from 0.25 g/cc to 1 g/cc, alternatively from 0.5 g/cc to 0.99 g/cc, alternatively from 0.7 g/cc to 0.99 g/cc. In another embodiment, the RWMA may exhibit a reduction in density when compared to an otherwise similar multilayer polymeric sheet in the absence of the foamed polymer layer of from 5.0% to 75%, alternatively from 5% to 52%, alternatively from 5% to 32%.

In an embodiment, the RWMA comprises a foamed layer (e.g., foamed polystyrene) sandwiched between two solid layers (e.g., solid polystyrene such as HIPS), wherein the RWMA has a total thickness of from 0.15 cm to 1.27 cm (0.060 inch to 0.50 inch), alternatively from 0.18 cm to 0.89 cm (0.070 inch to 0.35 inch), alternatively from 0.2 cm to 0.43 cm (0.080 inch to 0.170 inch); wherein the RWMA (foamed layer + 2 solid layers) has a density of from 0.6 g/cc to 1.0 g/cc, alternatively from 0.75 g/cc to 1.0 g/cc, alternatively from 0.9 g/cc to 1.0g/cc. In such an embodiment, the solid layers have a thickness of from 5% to 40% of the total thickness of the RWMA, alternatively from 10% to 30% and the foamed layer has a thickness of from 60% to 95% of the total thickness of the RWMA, alternatively from 70% to 90%. In such an embodiment, the solid layers may have a density from 0.9 g/cc to 1.8 g/cc, alternatively from 0.95 g/cc to 1.5 g/cc, alternatively from 1.03 g/cc to 1.06 g/cc and the foamed layers may have density of from 0.25 g/cc to 1.0 g/cc, alternatively from 0.5 g/cc to 0.99 g/cc, alternatively from 0.7 g/cc to 0.99 g/cc.

In an embodiment, an RWMA of the type described herein is opaque. Opaque articles generally have a porosity that is measured by a bulk density as described previously herein. In an embodiment, an RWMA of the type described herein may have an increased opacity when compared to an otherwise similar article lacking a foamed layer.

In an embodiment, the RWMA may be colored by the addition of a coloring agent, such as a dye or a pigment. Such dyes and/or pigments and amounts necessary to achieve a user-desired coloring of the RWMA may be designed and chosen by one of ordinary skill in the art with the benefit of this disclosure. Due to the opacity of the RWMA (i.e., increased porosity) a reduced amount of a coloring agent may be employed to achieve a user-desired coloring when compared to an otherwise similar article lacking a foamed layer.

The RWMAs of this disclosure may be converted to end-use articles. Examples of end use articles into which the RWMAs of this disclosure may be formed include liners (for cabinet, doors, appliances, refrigerators), food packaging, office supplies, plastic lumber, replacement lumber, patio decking, structural supports, laminate flooring compositions, polymeric foam substrate, decorative surfaces (e.g., crown molding, etc.), weatherable outdoor materials, point-of-purchase signs and displays, housewares and consumer goods, building insulation, cosmetics packaging, outdoor replacement materials, lids and containers (i.e. for deli, fruit, candies and cookies), appliances, utensils, electronic parts, automotive parts, enclosures, protective head gear, reusable paintballs, toys (e.g., LEGO bricks), musical instruments, golf club heads, piping, business machines and telephone components, shower heads, door handles, faucet handles, wheel covers, automotive front grilles, and so forth. In an embodiment, the RWMA is formed into an insulating layer, for example a liner, alternatively a freezer, refrigerator, ice chest, thermos, or cold box liner.

RWMAs of the type described herein may display desirable properties when compared to an otherwise similar article lacking a foamed polymeric layer. Herein, properties comparison (e.g., impact, tensile, shrinkage, etc.) are being made in comparison to an otherwise similar article lacking a foamed polymeric layer.

In an embodiment, an RWMA of the type described herein may exhibit a Gardner impact of from 5.75 kg-cm to 57.7 kg-cm (5 in-lbs to 50 in-lbs), alternatively from 11.5 kg-cm to 46.1 kg-cm (10 in-lbs to 40 in-lbs), alternatively from 18.4 kg-cm to 34.6 kg-cm (16 in-lbs to 30 in-lbs). Gardner impact, also known as Falling Dart impact, is measured using a weighted dart that is dropped onto a flat plaque from varying heights. The 50% failure height is determined to be the Gardner impact, as determined in accordance with ASTM 3029 Method G.

In an embodiment, an RWMA of the type described herein may exhibit a tensile strength at yield of from 6.9 MPa to 13.8 MPa (1000 psi to 2000 psi), alternatively from 7.6 MPa to 13.1 MPa (1100 psi to 1900 psi), alternatively from 9.0 MPa to 12.4 MPa (1300 psi to 1800 psi). The tensile strength at yield is the force per unit area required to yield a material, as determined in accordance with ASTM D882.

In an embodiment, an RWMA of the type described herein may exhibit a tensile strength at break of from 3.4 MPa to 20.7 MPa (500 psi to 3000 psi), alternatively from 6.7 MPa to 17.2 MPa (1000 psi to 2500 psi), alternatively from 10.3 MPa to 13.8 MPa (1500 psi to 2000 psi). The tensile strength at break is the force per unit area to break a material, as determined in accordance with ASTM D882.

In an embodiment, an RWMA of the type described herein may exhibit an elongation at yield of from 1% to 3%, alternatively from 1.2% to 2.5%, alternatively from 1.5% to 2.0%. The elongation at yield is the percentage increase in length that occurs at the yield point of a material, as determined in accordance with ASTM D882.

In an embodiment, an RWMA of the type described herein may exhibit an elongation at break of from 15% to 80%, alternatively from 20% to 60%, alternatively from 25% to 40%. The elongation at break is the percentage increase in length that occurs before a material break under tension, as determined in accordance with ASTM D882.

In an embodiment, an RWMA of the type described herein may exhibit a shrinkage of from 0% to 40%, alternatively from 0% to 20%, alternatively from 0% to 10%. The shrinkage may be calculated by first measuring the length of contraction upon cooling in the inflow direction (MD) and in the cross-flow direction (TD). The difference in the MD and TD at a given temperature, multiplied by 100% gives the percent shrinkage.

In an embodiment, the RWMA of the type described herein is a component (e.g., a core layer) of a refrigeration or cooling device, alternatively a refrigerator liner. Such liners may be situated within a refrigeration device such that the liners are in spatial proximity to one or more cooling components employing a refrigerant. In embodiments, such liners may serve as an insulation layer in a refrigeration device. For example, the liner may be disposed within one or more panels (e.g., cabinet panels or walls) or door of a refrigeration or cooling device and provide insulation to the device. For example, a refrigeration panel or door may comprise an RWMA as described herein disposed as an insulation layer between an exterior surface or structure (e.g., a metal sheet such as aluminum or stainless steel) and an interior surface or structure (e.g., an interior surface of a refrigerator door adjacent to where goods are stored). Alternatively, a solid layer of the RWMA serves as the interior surface or structure of a refrigeration device (e.g., an interior surface of a refrigerator door adjacent to where goods are stored) with one or more exterior surfaces or structures protecting same (e.g., exterior metal sheet/surface). In an embodiment, the RWMA may be disposed within a refrigeration or cooling device such that the RWMA is contacted, desirably or undesirably, with a refrigerant. For example, the RWMA may come into contact with a refrigerant as a result of a leak in a refrigeration system, and such contact may occur over an extended time where such leak is slow or minor in nature.

Refrigerants, also termed coolants, are compounds used in a heat cycle that undergo a phase change from a gas to a liquid and back. Early refrigerants, termed first generation refrigerants, were comprised of ozone depleting substances such as chlorofluorocarbons (CFCs) and have been replaced largely by more environmentally friendly materials termed second, third, and fourth generation refrigerants which are characterized by their decreased ozone depletion potential (ODP), global warming potential (GWP), safety, and durability. Examples of second generation refrigerants include without limitation hydrochlorofluorocarbons (HCFCs) such as monochlorodifluoromethane and dichlorofluoroethane. Examples of third generation refrigerants include without limitation partially hydrogenated fluorocarbons (HFCs) such as tetrafluoroethane and difluoromethane.

In an embodiment, a refrigeration device component prepared from an RWMA of the type described herein is able to maintain structural integrity when exposed to a refrigerant having a reduced ODP and/or GWP when compared to a first generation refrigerant. The ability to maintain structural integrity may be evidenced by the ability to pass an Environmental Stress Crack Resistance (ESCR) test with no visible crazes or cracks. The ESCR test is a test to evaluate the resistance of a material to crack based on environmental conditions. The ESCR test used herein is a qualitative test and the procedure is as follows: a 2.54-centimeter (1-inch) wide strip of an RWMA is placed on a strain jig with a 17.78-centimeter (7-inch) radius. The strip is painted with an attack agent and left exposed and under strain for 24 hours. The attack agent is typically a compound that attacks and weakens a polymer causing the polymer to become susceptible to stress failures which are indicated by the appearance of crazes and cracks. Examples of attack agents include without limitation oleic acid, cottonseed oil, unsalted butter, heptane, isopropyl alcohol, or combinations thereof. In an embodiment, the attack agent is a mixture of oleic acid and cottonseed oil at a volume ratio of 50:50. The strip is examined visually for any visible signs of attack by the stress crack attack agent, such as crazes or cracks in the painted areas after 24 hours. If there is no visible sign of attack, the article is said to have passed the ESCR test.

### EXAMPLES

The disclosure having been generally described, the following examples are given as particular embodiments of the disclosure and to demonstrate the practice and advantages thereof. It is understood that the examples are given by way of illustration and are not intended to limit the specification or the claims to follow in any manner.

### EXAMPLE 1

The tensile properties of three reduced weight multilayer polymeric sheets (RWMAs) designated Samples 2-4, of varying densities were investigated and compared to a single layer polymer sheet (Sample 1). All samples were prepared using 960E, which is a HIPS commercially available from Total Petrochemicals USA, Inc and the orientation of the samples was held constant. Samples 2-4 contained a foamed polymeric layer which was prepared using 960E and SAFOAM FP-40 blowing agent at 0.5 wt.% concentration.

Sample 1 was produced by sheet extrusion using a mini-coex line. Samples 2-4 were constructed by coextrusion and resulted in an "A-B-A" structure as illustrated in Figure 1. The processing conditions are tabulated in Table 3.

**Table 3**

| MAIN | |
|---|---|
| Zone 1 | 182.2°C (360 °F) |
| Zone 2 | 190.6°C (375 °F) |
| Zone 3 | 201.7°C (395 °F) |
| Zone 4 | 207.2°C (405 °F) |
| Clamp Ring | 207.2°C (405 °F) |
| Adaptor | 207.2°C (405 °F) |
| Feedblock | 212.8°C (415 °F) |
| Die | 215.6°C (420 °F) |
| Melt | 205.6°C (402 °F) |
| Pressure | 14.5 MPa (2100 psi) |
| R.P.M | 108 |
| % Load | 52 |
| | |

| TAKE OFF | |
|---|---|
| Top Roll | 90.6°C (195 °F) |
| Mid Roll | 93.3°C (200 °F) |
| Bottom Roll | 90.6°C (195 °F) |
| F.P.M | 2.46 |
| Pull Ratio | 1.1 |

Referring to Figure 1, layers 110 a and b are the outer layer constructed from solid 960E, which for Samples 2-4 each has a % thickness of 10%, 20%, and 30% respectively. Layer 120 is foamed 960E, which for Samples 2-4 each has a %thickness 80%, 60%, and 40% respectively. All samples were prepared at a target sheet gauge of 1.78 mm (70 mils). The ESCR, density, impact properties, tensile properties, and shrinkage properties were determined for all samples in accordance with the methodologies described previously herein and the results are tabulated in Table 4.

**Table 4**

| | Sample 1 | Sample 2 | Sample 3 | Sample 4 |
|---|---|---|---|---|
| Properties | 960E Solid Layer | 10% Solid Outer Layers 80% Foamed Inner Core Layer | 20% Solid Outer Layers 60% Foamed Inner Core Layer | 30% Solid Outer Layers 40% Foamed Inner Core Layer |
| Density (g/cc) | 1.04 | 0.88 | 0.92 | 0.96 |
| Percent Change (vs. solid sheet) | 0.0 | 14.6 | 10.7 | 6.8 |
| Gardner Impact (kg-cm) | 48.5 (42.1 in-lb) | 19.1 (16.6 in-lb) | 25.3 (22.0 in-lb) | 34.7 (30.1 in-lb) |
| Tensile Strength at Yield (MD) MPa | 14.4 (2084 psi) | 9.4 (1363 psi) | 10.8 (1566 psi) | 11.9 (1722 psi) |
| Tensile Strength at Break (MD) MPa | 17.7 (2565 psi) | 11.6 (1676 psi) | 12.9 (1873 psi) | 13.9 (2016 psi) |
| Elongation at Yield (MD) % | 1.9 | 1.8 | 1.8 | 1.9 |
| Elongation at Break (MD) % | 29.7 | 35.7 | 37.4 | 37.7 |
| Tensile Strength at Yield (TD) MPa | 14.6 (2120 psi) | 9.42 (1366 psi) | 11.0 (1596 psi) | 12.3 (1780 psi) |
| Tensile Strength at Break (TD) MPa | 17.4 (2527 psi) | 10.9 (1584 psi) | 12.4 (1794 psi) | 13.0 (1888 psi) |
| Elongation at Yield (TD) % | 2.0 | 1.8 | 1.8 | 1.9 |
| Elongation at Break (TD) % | 62.9 | 30.6 | 33.5 | 32.3 |
| Shrinkage (MD) % | 6.7 | 2.3 | 1.5 | 2.2 |
| Shrinkage (TD) % | 0.0 | 0.0 | 0.0 | 0.0 |
| ESCR (Visual) | No crazes or cracks | No crazes or cracks | No crazes or cracks | No crazes or cracks |

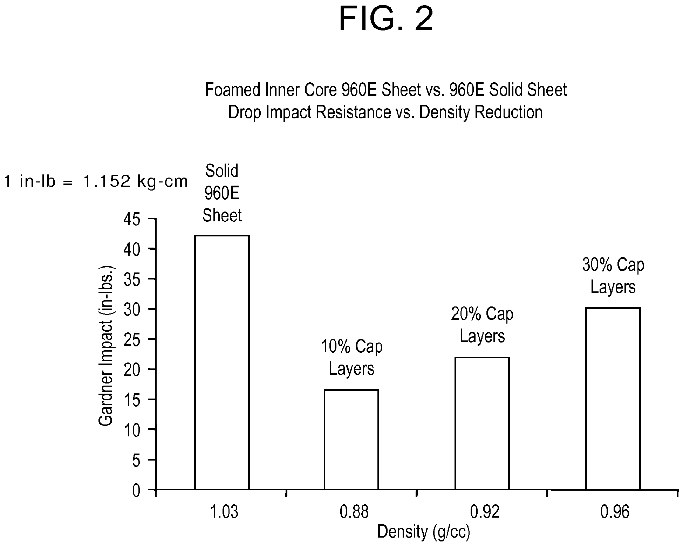

Referring to Table 4, Samples 2, 3, and 4 had a density that was reduced by 14.6%, 10.7%, and 6.8% respectively when compared to Sample 1. Figure 2 is a plot of Gardner impact as a function of density for these samples. It was observed that as the density decreased the Gardner impact for Samples 2-4 also decreased when compared to the impact strength determined for Sample 1. This trend was expected since the weights of Samples 2-4 were reduced. The percent elongation results showed a rapid loss of ductility with the samples having a foamed layer exhibiting a roughly 50% reduction in elongation.

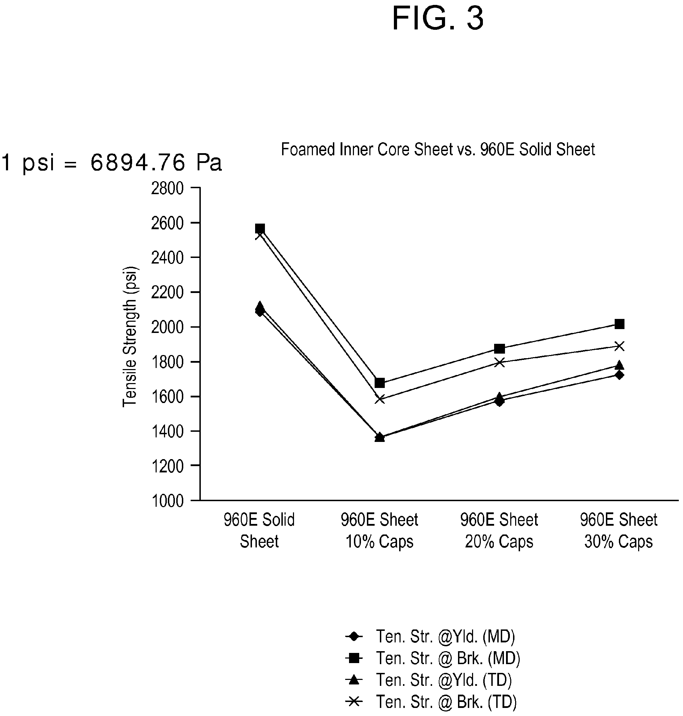

Figure 3 is a plot of tensile strength properties for Samples 1-4. Similarly, as density decreased, the tensile strength properties for Samples 2-4 also decreased when compared to Sample 1. Samples 2-4 also showed an increased in elongation at break in the MD, with a concomitant decrease in the elongation at break in the TD.

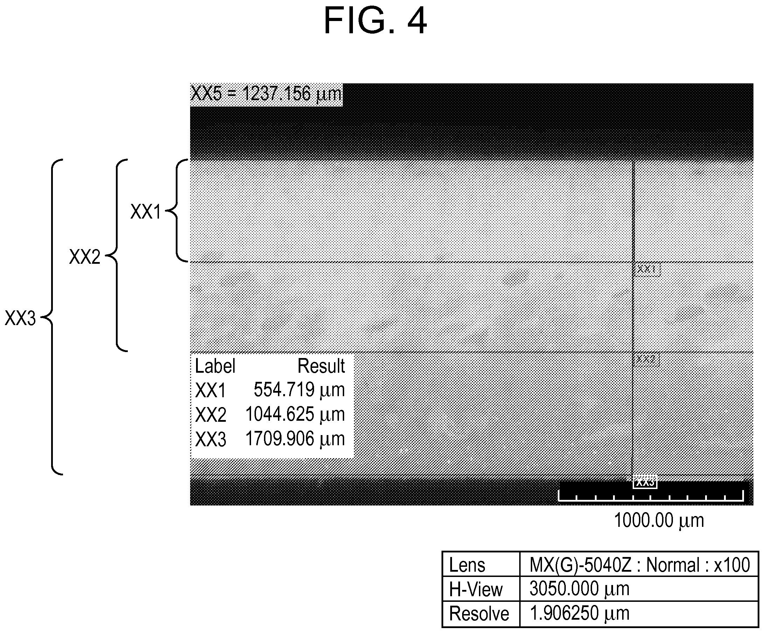

Figure 4 is a photomicrograph of a foamed inner core layer for Sample 4. Referring to Figure 4, the image shows a number of voids 410 within the HIPS. In addition, the thicknesses of the solid outer layer (e.g., top and bottom), as well as the thickness of the inner core foamed layer were determined. XX1 is the solid outer top layer, XX2 is the combination of the solid outer top layer and the inner core foamed layer, XX3 is the total of the solid outer top layer, the inner core foamed layer, and the solid outer bottom layer. The thickness of XXI, XX2, and XX3 were 554.719 µm, 1044.625 µm, and 1709.906 µm respectively. Thus, the thicknesses of the solid outer top layer, the inner core foamed layer, and the solid outer bottom layer for Sample 4 were determined to be about 554 µm, 490 µm, and 665 µm respectively.

The embodiments described herein are exemplary only, and are not intended to be limiting. Many variations and modifications of the disclosure disclosed herein are possible and are within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, RL, and an upper limit, Ru, is disclosed, any number falling within the range is specifically disclosed. In particular, the following numbers within the range are specifically disclosed: R=R_{L} +k^{∗} (R_{U}-R_{L}), wherein k is a variable ranging from 1 percent to 100 percent with a 1 percent increment, i.e., k is 1 percent, 2 percent, 3 percent, 4 percent, 5 percent, ...50 percent, 51 percent, 52 percent, ....., 95 percent, 96 percent, 97 percent, 98 percent, 99 percent, or 100 percent. Moreover, any numerical range defined by two R numbers as defined in the above is also specifically disclosed. Use of the term "optionally" with respect to any element of a claim is intended to mean that the subject element is required, or alternatively, is not required. Both alternatives are intended to be within the scope of the claim. Use of broader terms such as comprises, includes, having, etc. should be understood to provide support for narrower terms such as consisting of, consisting essentially of, comprised substantially of, etc.

## Claims

1. A method of preparing a refrigeration insulation liner comprising:
forming a multilayer polymeric sheet comprising a foamed layer (120) sandwiched between two solid layers (110a, 110b); and
shaping the multilayer polymeric sheet into the liner,
wherein the liner is an insulator,
wherein the layers of the sheet adhered to each other by melt extrusion, and
wherein the liner resists degradation in the event of contact with a refrigerant.

2. The method of claim 1 wherein the polymeric sheet comprises polystyrene, polypropylene, polyethylene, polyethylene terephthalate, polyvinyl chloride, polyvinylidine chloride, polylactic acid, polyamide, polycarbonate, polytetrafluoroethylene, polyurethane, polyester, polymethyl methacrylate, polyoxymethylene, homopolymers thereof, copolymers thereof, or combinations thereof.

3. The method of claim 1 wherein the solid and foamed layers (120; 110a; 110b) comprise polystyrene, and wherein the polystryrene is foamed by contacting the polystyrene with a foaming agent.

4. The method of claim 1 wherein the liner comprises a foamed polystyrene layer sandwiched between two solid high impact polystyrene layers.

5. The method of claim 4 wherein the foamed layer (120) has a thickness of 60% to 95% and each solid layer (110a, 110b) has a thickness of 5% to 40% based on the total thickness of the polymeric sheet.

6. The method of claim 4 wherein the foamed layer (120) has a density of 0.25 g/cc to 1 g/cc and each solid layer (110a, 110b) has a density of 0.9 g/cc to 1.8 g/cc.

7. The method of claim 1 wherein the liner has a density of from 0.25 g/cc to 1 g/cc.

8. The method of claim 1 wherein the liner has a Gardner impact of from 5.75 kg-cm (5 in-lbs) to 57.5 kg-cm (50 in-lbs).

9. The method of claim 1 wherein the liner has a tensile strength at yield of from 6.89 MPa (1000 psi) to 13.8 MPa (2000 psi).

10. The method of claim 1 wherein the liner has a tensile strength at break of from 3.45 MPa (500 psi) to 20.7 MPa (3000 psi).

11. The method of claim 1 wherein the liner has an elongation at yield of from 1% to 3%.

12. The method of claim 1 wherein the liner has an elongation at break of from 15% to 80%.

13. The method of claim 1 wherein the liner has a shrinkage of from 0% to 40%.

14. The method of claim 1 wherein the liner passes an environmental stress crack resistance (ESCR) test; the ESCR test being as follows: a 2.54 cm (1 inch) wide strip of the liner is placed on a strain jig with a 17.78 cm (7 inch) radius; the strip being painted with an attack agent and left exposed and under strain for 24 hours; the attack agent being a mixture of oleic acid and cottonseed oil at a volume ratio of 50:50; then the strip is examined visually for any visible signs of attack by the stress crack attack agent, such as crazes or cracks in the painted areas after 24 hours; and if there is no visible sign of attack, the liner is said to have passed the ESCR test.

15. The method of claim 1 wherein the refrigerant is a non-CFC refrigerant.

16. The method of claim 1 further comprising incorporating the liner into the refrigeration device.

17. The method according to claim 1, wherein the multilayer polymeric sheet is formed by coextruding a foamed polystyrene layer between two solid layers of high impact polystyrene; and wherein the shaping is made by thermoforming the sheet at a temperature of from 120 °C to 165 °C; and wherein the liner is incorporated into a refrigeration device.

18. The method of claim 17 wherein the refrigeration device comprises a non-CFC refrigerant.

19. The method according to claim 1, wherein the multilayer polymeric sheet is formed by coextrusion of a polymeric composition comprising a high impact polystyrene and at least one of the layers having been foamed by incorporation of a chemical blowing agent, thereby reducing the weight of the refrigeration insulation liner.

## Patentansprüche

1. Verfahren zum Herstellen einer Kühlisolierauskleidung, umfassend:
Bilden einer mehrschichtigen Polymerfolie, umfassend eine geschäumte Schicht (120), die zwischen zwei kompakten Schichten (110a, 110b) angeordnet ist; und
Formen der mehrschichtigen Polymerfolie zu der Auskleidung,
wobei die Auskleidung ein Isolierstoff ist,
wobei die Schichten der Folie durch Schmelzextrusion aneinander haften und
wobei die Auskleidung gegen Abbau bei Kontakt mit einem Kühlmittel stabil ist.

2. Verfahren nach Anspruch 1, wobei die Polymerfolie Polystyrol, Polypropylen, Polyethylen, Polyethylenterephthalat, Polyvinylchlorid, Polyvinylidinchlorid, Polymilchsäure, Polyamid, Polycarbonat, Polytetrafluorethylen, Polyurethan, Polyester, Polymethylmethacrylat, Polyoxymethylen, Homopolymere davon, Copolymere davon oder Kombinationen davon umfasst.

3. Verfahren nach Anspruch 1, wobei die kompakten und die geschäumten Schichten (120; 110a; 110b) Polystyrol umfassen, und wobei das Polystyrol geschäumt wird, indem das Polystyrol mit einem Schaummittel in Kontakt gebracht wird.

4. Verfahren nach Anspruch 1, wobei die Auskleidung eine geschäumte Polystyrolschicht umfasst, die zwischen zwei kompakten hochschlagfesten Polystyrolschichten angeordnet ist.

5. Verfahren nach Anspruch 4, wobei die geschäumte Schicht (120) bezogen auf die Gesamtdicke der Polymerfolie eine Dicke von 60 % bis 95 % aufweist und jede kompakte Schicht (110a, 110b) eine Dicke von 5 % bis 40 % aufweist.

6. Verfahren nach Anspruch 4, wobei die geschäumte Schicht (120) eine Dichte von 0,25 g/cm³ bis 1 g/cm³ aufweist und jede kompakte Schicht (110a, 110b) eine Dichte von 0,9 g/cm³ bis 1,8 g/ cm³ aufweist.

7. Verfahren nach Anspruch 1, wobei die Auskleidung eine Dichte von 0,25 g/cm³ bis 1 g/cm³ aufweist.

8. Verfahren nach Anspruch 1, wobei die Auskleidung einen Gardner-Schlag von 5,75 kg-cm (5 in-lbs) bis 57,5 kg-cm (50 in-lbs) aufweist.

9. Verfahren nach Anspruch 1, wobei die Auskleidung eine Streckspannung von 6,89 MPa (1000 psi) bis 13,8 MPa (2000 psi) aufweist.

10. Verfahren nach Anspruch 1, wobei die Auskleidung eine Reißfestigkeit von 3,45 MPa (500 psi) bis 20,7 MPa (3000 psi) aufweist.

11. Verfahren nach Anspruch 1, wobei die Auskleidung eine Dehnung bei Streckgrenze von 1 % bis 3 % aufweist.

12. Verfahren nach Anspruch 1, wobei die Auskleidung eine Bruchdehnung von 15 % bis 80 % aufweist.

13. Verfahren nach Anspruch 1, wobei die Auskleidung eine Schrumpfung von 0 % bis 40 % aufweist.

14. Verfahren nach Anspruch 1, wobei die Auskleidung einen Test auf Spannungsrissbeständigkeit (ESCR) besteht; wobei der ESCR-Test wie folgt abläuft: Ein 2,54 cm (1 Zoll) breiter Streifen der Auskleidung wird auf eine Dehnspannvorrichtung mit einem Radius von 17,78 cm (7 Zoll) gelegt; der Streifen wird mit einem Angriffsmittel lackiert und 24 Stunden lang einer Dehnspannbelastung ausgesetzt; bei dem Angriffsmittel handelt es sich um ein Gemisch aus Ölsäure und Baumwollsamenöl in einem Volumenverhältnis von 50:50; anschließend, nach 24 Stunden, wird der Streifen mittels Sichtprüfung auf sichtbare Anzeichen eines Angriffs durch das Spannungsriss-Angriffsmittel, wie etwa Haarrisse oder Risse in den lackierten Bereichen, untersucht; gibt es es keine sichtbaren Anzeichen für einen Angriff, gilt die Auskleidung als den ESCR-Test bestanden.

15. Verfahren nach Anspruch 1, wobei das Kühlmittel ein FCKW-freies Kühlmittel ist.

16. Verfahren nach Anspruch 1, ferner umfassend Einbringen der Auskleidung in die Kühlvorrichtung.

17. Verfahren nach Anspruch 1, wobei die mehrschichtige Polymerfolie durch Coextrudieren einer geschäumten Polystyrolschicht zwischen zwei kompakten Schichten aus hochschlagfestem Polystyrol gebildet wird;
und wobei das Formen durch Thermoformen der Folie bei einer Temperatur von 120 °C bis 165 °C erfolgt; und wobei die Auskleidung in eine Kühlvorrichtung eingebracht wird.

18. Verfahren nach Anspruch 17,
wobei die Kühlvorrichtung ein FCKW-freies Kühlmittel umfasst.

19. Verfahren nach Anspruch 1, wobei die mehrschichtige Polymerfolie durch Coextrusion einer Polymerzusammensetzung gebildet wird, die ein hochschlagfestes Polystyrol und mindestens eine der Schichten umfasst, die durch Einbringen eines chemischen Treibmittels geschäumt wurden, wodurch das Gewicht der Kühlisolierschicht verringert wird.

## Revendications

1. Procédé de préparation d'un revêtement isolant de réfrigération comprenant :
la formation d'une feuille polymère multicouche comprenant une couche expansée (120) intercalée entre deux couches pleines (110a, 110b) ; et
une mise en forme de la feuille polymère multicouche pour donner le revêtement,
dans lequel le revêtement est un isolant,
dans lequel les couches de la feuille ont adhéré l'une à l'autre par extrusion à l'état fondu, et
dans lequel le revêtement résiste à la dégradation en cas de contact avec un réfrigérant.

2. Procédé selon la revendication 1, dans lequel la feuille polymère comprend du polystyrène, du polypropylène, du polyéthylène, du poly(téréphtalate d'éthylène), du poly(chlorure de vinyle), du poly(chlorure de vinylidène), du poly(acide lactique), du polyamide, du polycarbonate, du polytétrafluoréthylène, du polyuréthane, du polyester, du poly(méthacrylate de méthyle), du polyoxyméthylène, des homopolymères de ceux-ci, des copolymères de ceux-ci et leurs combinaisons.

3. Procédé selon la revendication 1, dans lequel les couches pleines et expansée (120 ; 110a ; 110b) comprennent du polystyrène, et dans lequel le polystyrène est expansé par mise en contact du polystyrène avec un agent moussant.

4. Procédé selon la revendication 1, dans lequel le revêtement comprend une couche de polystyrène expansée intercalée entre deux couches pleines de polystyrène à grande résistance au choc.

5. Procédé selon la revendication 4, dans lequel la couche expansée (120) a une épaisseur de 60 % à 95 % et chaque couche pleine (110a, 110b) a une épaisseur de 5 % à 40 %, par rapport à l'épaisseur totale de la feuille polymère.

6. Procédé selon la revendication 4, dans lequel la couche expansée (120) a une masse volumique de 0,25 g/m³ à 1 g/m³ et chaque couche pleine (110a, 110b) a une masse volumique de 0,9 g/m³ à 1,8 g/m³.

7. Procédé selon la revendication 1, dans lequel le revêtement a une masse volumique allant de 0,25 g/m3 à 1 g/m3.

8. Procédé selon la revendication 1, dans lequel le revêtement a un une résistance au choc Gardner de 5,75 kg-cm (5 in-lbs) à 57,5 kg-cm (50 in-lbs).

9. Procédé selon la revendication 1, dans lequel le revêtement a une résistance à la traction au seuil d'écoulement de 6,89 MPa (1000 psi) à 13,8 MPa (2000 psi).

10. Procédé selon la revendication 1, dans lequel le revêtement a une résistance à la traction à la rupture comprise entre 3,45 MPa (500 psi) et 20,7 MPa (3000 psi).

11. Procédé selon la revendication 1, dans lequel le revêtement a un allongement au seuil d'écoulement de 1 % à 3 %.

12. Procédé selon la revendication 1, dans lequel le revêtement a un allongement à la rupture de 15 % à 80%.

13. Procédé selon la revendication 1, dans lequel le revêtement a un retrait compris entre 0 % et 40 %.

14. Procédé selon la revendication 1, dans lequel le revêtement satisfait à un essai de résistance à la fissuration sous contrainte dans un environnement donné (ESCR) ; l'essai ESCR étant comme suit : une bande de 2,54 cm (1 pouce) de large du revêtement est placée sur un gabarit de déformation ayant un rayon de 17,78 cm (7 pouce) ; la bande étant peinte avec un agent d'attaque et laissée exposée et soumise à des déformations pendant 24 heures ; l'agent d'attaque étant un mélange d'acide oléique et d'huile de coton selon un rapport volumique de 50:50 ; ensuite, au bout de 24 heures, la bande est examinée à l'oeil nu pour détecter tout signe d'attaque visible de l'agent d'attaque conduisant à une fissuration sous contrainte, tel que des craquelures ou des fissures dans les zones peintes; et s'il n'y a aucun signe visible d'attaque, on dit que le revêtement a satisfait à l'essai ESCR.

15. Procédé selon la revendication 1, dans lequel le réfrigérant est un réfrigérant sans CFC.

16. Procédé selon la revendication 1, comprenant en outre l'incorporation du revêtement dans le dispositif de réfrigération.

17. Procédé selon la revendication 1, dans lequel la feuille polymère multicouche est formée par coextrusion d'une couche de polystyrène expansé entre deux couches pleines de polystyrène à grande résistance au choc ;
et dans lequel la mise en forme est réalisée par thermoformage de la feuille à une température de 120 °C à 165 °C ; et dans lequel le revêtement est incorporé dans un dispositif de réfrigération.

18. Procédé selon la revendication 17
dans lequel le dispositif de réfrigération comprend un réfrigérant sans CFC.

19. Procédé selon la revendication 1, dans lequel la feuille polymère multicouche est formée par coextrusion d'une composition polymère comprenant un polystyrène à haute résistance au choc et au moins une des couches ayant été expansées par incorporation d'un agent porogène chimique, réduisant ainsi le poids du revêtement isolant de réfrigération.
